Europäisches Patentamt

(19) European Patent Office

Office européen des brevets

(11) Publication number: **0 195 386**
**A2**

# (12) EUROPEAN PATENT APPLICATION

(21) Application number: **86103484.1**

(22) Date of filing: **14.03.86**

(51) Int. Cl.⁴: **B 29 C 61/00**
**//B29K27/06**

(30) Priority: 15.03.85 JP 52840/85

(43) Date of publication of application:
24.09.86 Bulletin 86/39

(84) Designated Contracting States:
DE FR GB IT

(71) Applicant: Shin-Etsu Chemical Co., Ltd.
6-1, Ohtemachi 2-chome
Chiyoda-ku Tokyo 100(JP)

(72) Inventor: Ogushi, Yoshimi
77-10, Omiya Plaza
Omiya-shi Saitama-ken(JP)

(72) Inventor: Soda, Yasutoshi
477-6-104, Konba-cho
Omiya-shi Saitama-ken(JP)

(74) Representative: Jaeger, Klaus, Dr. et al,
JAEGER & PARTNER Patentanwälte Bergstrasse 48 1/2
D-8035 München-Gauting(DE)

(54) A heat-shrinkable shaped article of a vinyl chloride-based resin and a method for the preparation thereof.

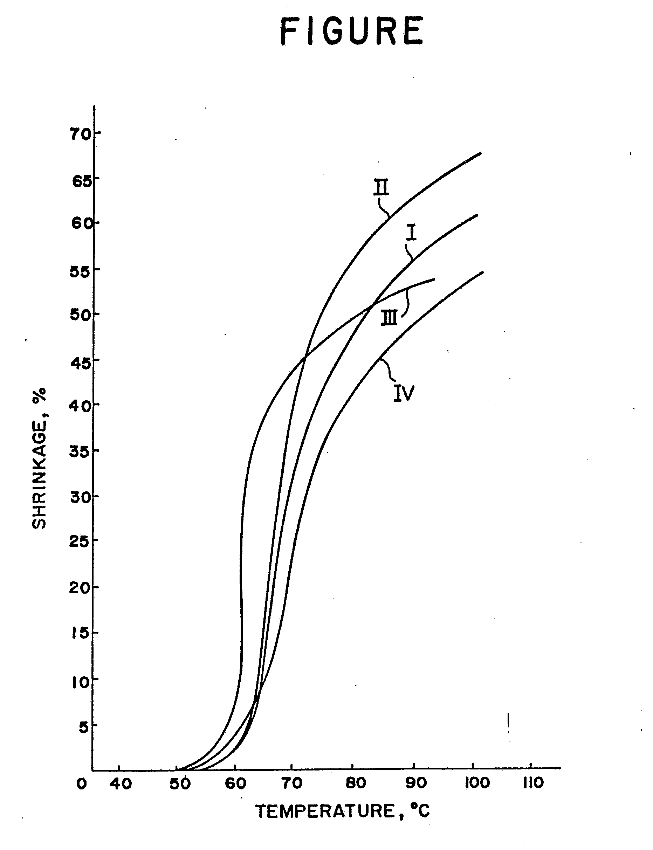

(57) The heat-shrinkable shaped article, e.g. films and tubes, having rigidity is prepared of a molding compound of a copolymeric polyvinyl chloride resin containing 1-30 % by weight of vinyl acetate instead of a homopolymeric polyvinyl chloride resin, optionally, plasticized with 10 % by weight or less of a plasticizer. The drawing work of the shaped article is performed at a temperature higher by 10 to 70°C than the Clash-Berg heat-distortion temperature of the shaped article. The heat-shrinkable shaped article has excellent clarity and exhibits excellent behavior of shrinking by heating.

EP 0 195 386 A2

# A HEAT-SHRINKABLE SHAPED ARTICLE OF A VINYL CHLORIDE-BASED
# RESIN AND A METHOD FOR THE PREPARATION THEREOF

## BACKGROUND OF THE INVENTION

The present invention relates to a heat-shrinkable shaped article of a vinyl chloride-based resin and a method for the preparation thereof or, more particularly, to a heat-shrinkable shaped article of a rigid vinyl chloride-based resin having excellent transparency and a method for the preparation of the same.

As is well known, heat-shrinkable films and tubes of a polyvinyl chloride resin have excellent transparency, surface luster and heat-sealability as well as good resistance against chemicals, water resistance and printability so that they are used in a variety of application fields as a wrapping material of goods beginning with foods even to include machine parts and have found applications for cap seals, labels and the like.

In the preparation of these heat-shrinkable films and tubes, a polyvinyl chloride resin as a base material is first shaped into the form of a film or tube by a known method such as calendering, T-die extrusion, tubular extrusion and the like and the film or tube is subjected to uniaxial or biaxial drawing at a temperature somewhat lower than the melting point, i.e. about 95 to 105 °C, of the base resin followed by cooling without releasing the tension for drawing.

The base resin used in the above described process is usually admixed with several kinds of processing aids including plasticizers, stabilizers, lubricants and the like. When the base resin is compounded with a decreased amount of the plasticizer with an object to obtain shaped articles having rigidity, difficulties are encountered in the drawing works of the shaped articles under heating. For example, films of an unplasticized polyvinyl chloride resin or a resin compounded with a decreased amount of a plasticizer may eventually be broken when it is subjected to drawing in a high drawing ratio.

## SUMMARY OF THE INVENTION

The heat-shrinkable shaped article of a vinyl chloride-based resin of the invention provides a solution of the above mentioned problems in the prior art products and is prepared by the method comprising the steps of shaping a copolymeric resin of 99 to 70 % by weight of vinyl chloride and 1 to 30 % by weight of vinyl acetate, the resin being optionally compounded with a plasticizer in an amount not to exceed 10 % by weight based on the resin, stabilizer and lubricant into a shaped article and then subjecting the shaped article to drawing at a temperature higher by at least 10°C than but not higher by more than 70 °C than the Clash-Berg heat-distortion temperature of the shaped article.

BRIEF DESCRIPTION OF THE DRAWING

The figure graphically shows the percentage of shrinkage of each of the heat-shrinkable articles prepared in the Examples as a function of the heating temperature to cause shrinkage.

DETAILED DESCRIPTION OF THE PREFERRED EMBODIMENTS

As is described in the above, the base resin of the inventive heat-shrinkable shaped article is not a conventional homopolymeric polyvinyl chloride resin but is a copolymeric resin of vinyl chloride and vinyl acetate in a specified copolymerization ratio so that a film or tube of even an unplasticized resin or a resin compounded with a remarkably decreased amount of a plasticizer can well withstand the drawing works in a high drawing ratio at an elevated temperature for the preparation of a heat-shrinkable article. Accordingly, the disadvantage of broken films or tubes in the drawing works can be obviated and high-quality heat-shrinkable products can be produced with reliability and in a high yield.

In addition, the maximum drawing ratio of the films and tubes can be remarkably increased according to the invention up to 400 % without particular difficulties whereas the maximum drawing ratio in the conventional industrial process is 200 % to 250 %. Consequently, the heat-shrinkable shaped article of the invention can exhibit a remarkably increased percentage of shrinkage in comparison with conventional products. For example, a percentage of shrinkage as high as 70 % can be obtained in a heat-shrinkable article of the invention by heating for 5 minutes in hot water at 100 °C in contrast to the highest value of about 50 % in a similar product of the prior art under the same heating conditions.

Another advantage of the invention is given by the relatively low heating temperature at which the drawing works of the films or tubes are performed. For example, the drawing works in the inventive method can be performed at about 70 °C while it is generally accepted in the prior art that the drawing works of a shaped article of a polyvinyl chloride resin should be performed at a temperature of 90 to 100 °C. The heat-shrinkable shaped articles prepared by drawing at such a low temperature have large shrinkability, in particular, at a relatively low heating temperature to effect shrinkage so that they are useful in applications in which the works to effect shrinkage should be performed at a temperature as low as possible. In addition, the heat-shrinkable shaped articles of the invention, e.g. heat-shrinkable films and tubes, have characteristically high transparency with an extremely small number of fish eyes.

The base resin used in the invention is a coplymeric resin of vinyl chloride and vinyl acetate which can be prepared by a known method. The monomeric content of vinyl acetate in the copolymeric resin should be in the range from 1 to 30 % by weight or, preferably, from 3 to 15 % by weight. When the content of vinyl acetate in the copolymeric resin is too small, difficulties are encountered in the drawing works of films and tubes of the resin in a high drawing ratio. When the content of vinyl acetate is too large, on the other hand, the copolymeric resin suffers remarkably decreased heat stability.

The copolymeric resin of vinyl chloride and vinyl acetate mentioned above is shaped as such into films, sheets, tubes and the like to be subjected to the drawing works although it is optional that the resin is compounded with various kinds of additives according to need including plasticizers, stabilizers, lubricants, fillers, coloring agents and the like conventionally added to a polyvinyl chloride resin compound. The amount of plasticizers should be limited not to exceed 10 parts by weight per 100 parts by weight of the copolymeric resin as the base material in order to obtain heat-shrinkable shaped articles having rigidity.

The drawing work of the shaped articles, e.g. films and tubes, should desirably be performed by heating the same at a temperature which is higher by at least 10 $^{\circ}$C than but not higher by more than 70 $^o$C than the Clash-Berg heat-distortion temperature of the shaped article determined by the procedure specified in JIS K 6745. When the temperature is lower than the above mentioned lower limit of the temperature range, a desired drawing ratio can not always be obtained in the drawing work of the shaped article. When the heating temperature is too high, on the other hand, the shaped article may be too soft to be satisfactorily subjected to drawing.

The heat-shrinkable articles, e.g. films, of the vinyl chloride-based resin according to the invention have high clarity with a limited content of plasticizers, if contained, and are capable of exhibiting a markedly high percentage of shrinkage by heating in comparison with conventional heat-shrinkable shaped articles of a polyvinyl chloride resin, in particular, at a relatively low heating temperature to effect shrinkage so that they are particularly useful as a wrapping material of foods and the like.

In the following, the present invention is illustrated in more detail by way of examples.

Example 1.

A molding resin compound was prepared by uniformly milling a mixture composed of 100 parts by weight of a copolymeric resin of 95 % by weight of vinyl chloride and 5 % by weight of vinyl acetate (MA 800F, a product by Shin-Etsu Chemical Co.), 5 parts by weight of dioctyl phthalate as a plasticizer and 5 parts by weight of an MBS resin as an impact strength improver together with small amounts of a tin-containing stabilizer and a lubricant and the compound was shaped by calendering into a colorless and transparent film having a thickness of 0.2 mm. Separately, test pieces were prepared of this molding compound and the tensile strength and the Clash-Berg heat-distortion temperature were measured thereof to give values of 480 kg/cm$^2$ and 53 $^{\circ}$C, respectively.

The above mentioned resin film of 0.2 mm thickness was subjected to drawing at a temperature of 80 $^{\circ}$C in the transverse direction on a tenter in a drawing ratio of 300 % or 400 % to give heat-shrinkable films. No film was lost by breaking in the drawing works under the above mentioned conditions to give a 100 % yield.

The thus obtained heat-shrinkable film of 300 % drawing was very excellent in clarity with a cloudiness value of 1.6 as determined according to the procedure specified in JIS K 6714 and 5 pieces of fish eyes per 300 cm$^2$ area, each fish eye having a diameter of at least 0.1 mm. The film of 400 % drawing was also excellent in clarity.

These heat-shrinkable films heated for 5 minutes in hot water at varied temperatures to give the results of %
shrinkage shown in the figure of the accompanying drawing by
the curves I and II for the films of 300 % drawing and 400 %
drawing, respectively, the values being 60 % and 67 % at 100
°C, respectively.

Example 2.

A molding compound based on a copolymeric resin of vinyl chloride and vinyl acetate was prepared with the same
formulation as in Example 1 except that the content of vinyl
acetate in the copolymeric resin (MA 800S, a product by
Shin-Etsu Chemical Co.) was 7 % by weight instead of 5 % by
weight. This molding compound had a Clash-Berg heat-distortion temperature of 50 °C.

The molding compound was shaped by continuous extrusion
molding into a tube which, as extruded, was successively
subjected to radial expansion at 70 °C to give a drawing
ratio of about 250 %.

For comparison, another heat-shrinkable tube was prepared in just the same manner as above excepting the replacement of the copolymeric resin with a homopolymeric
polyvinyl chloride resin.

These heat-shrinkable tubes were heated for 5 minutes
in hot water at varied temperatures to give the results of % shrinkage shown in the figure of the accompanying drawing by the curves III and IV for the tubes prepared from the copolymeric resin and the homopolymeric resin, respectively. The % shrinkage of the tube prepared from the copolymeric resin was larger than 40 % by heating in hot water at 65 °C.

Separately, the molding compound of the copolymeric resin was shaped into a film and drawn in a drawing ratio of 250 % in the same manner as in the preceding example. The thus prepared heat-shrinkable film was also very excellent in clarity with a clarity value of 2.1 according to JIS K 6714 and contained 5 pieces of fish eyes having a diameter of 0.1 mm or larger in 300 cm$^2$ area.

WHAT IS CLAIMED IS:

1. A heat-shrinkable shaped article of a molding compound of vinyl chloride-based resin comprising a copolymeric resin composed of from 99 to 70 % by weight of vinyl chloride and from 1 to 30 % by weight of vinyl acetate.

2. The heat-shrinkable shaped article as claimed in claim 1 wherein the molding compound comprises up to 10 parts by weight of a plasticizer per 100 parts by weight of the coplymeric resin.

3. The heat-shrinkable shaped article as claimed in claim 1 wherein the content of vinyl acetate in the copolymeric resin is in the range from 3 to 15 % by weight.

4. A method for the preparation of a heat-shrinkable shaped article of a molding compound of vinyl chloride-based resin which comprises the steps of:
(a) shaping a molding compound comprising a copolymeric resin composed of from 99 to 70 % by weight of vinyl chloride and from 1 to 30 % by weight of vinyl acetate into a shaped article;
(b) drawing the shaped article heated at a temperature which is higher by at least 10 °C than but not higher by more than 70 °C than the Clash-Berg heat-distortion temperature of the shaped article as determined by the procedure specified in JIS K 6745 by applying a drawing tension; and

(c) cooling the thus drawn shaped article without releasing

the drawing tension.

# FIGURE